(19)

Europäisches
Patentamt
European
Patent Office
Office européen
des brevets

(11) **EP 2 562 047 A1**

(12) **EUROPEAN PATENT APPLICATION**

(43) Date of publication:
**27.02.2013 Bulletin 2013/09**

(51) Int Cl.:
***B60R 1/00*** *(2006.01)*

(21) Application number: **12160914.3**

(22) Date of filing: **23.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.08.2011 JP 2011181151**

(71) Applicant: **Fujitsu General Limited
Kawasaki-shi
Kanagawa 213-8502 (JP)**

(72) Inventor: **Kato, Hironori
Kawasaki-shi, Kanagawa 213-8502 (JP)**

(74) Representative: **Vigand, Philippe et al
Novagraaf International SA
Chemin de l'Echo 3
1213 Onex (CH)**

(54) **Drive assisting apparatus**

(57) A drive assisting apparatus includes: an imaging unit disposed at a rear position of a vehicle; an image processor which generates an image obtained by the imaging unit; and a display unit which displays the image. The image processor generates a rear image, a rear-right side image and a rear-left side image from the obtained rear neighborhood image. The rear image is displayed at an upper position of a display unit, and the rear-right and the rear-left side images are displayed in a lower position thereof. The rear-right side image is generated so that a vertical width thereof is increased as a position goes away from a central portion to a right side of the display unit, and the rear-left side image is generated so that a vertical width thereof is increased as a position goes away from the central portion to a left side of the display unit.

EP 2 562 047 A1

**Description**

FIELD OF THE INVENTION

The present disclosure relates to a drive assisting apparatus for assisting driving of a vehicle, and more particularly, relates to a drive assisting apparatus which displays a drive assist image on a display means provided inside a vehicle using an image obtained by capturing an image of a neighborhood of the vehicle with an imaging means that is fixed to the vehicle.

DESCRIPTION OF RELATED ART

Among related-art apparatus for assisting a driver to check a neighborhood of a vehicle in driving, there is a drive assisting apparatus which captures an image of the neighborhood of the vehicle with an imaging means that is fixed to the vehicle at a prescribed position such as a rear position of the vehicle and displays a resulting image on a display means provided inside the vehicle. The use of such a drive assisting apparatus allows the driver to check more easily whether or not an obstacle or a person exists behind the vehicle when, for example, the driver parks the vehicle in a parking lot or the like by reversing the vehicle.

In such a drive assisting apparatus, how easily the driver can check the neighborhood of the vehicle depends on the image displayed on the display means which is provided inside the vehicle. Therefore, various drive assisting apparatus have been proposed which display, on a display means, an image that allows the driver to check the neighborhood more easily by performing viewing point conversion and image processing on an image taken by the imaging means.

For example, Japanese Patent Application Publication No. JP-A-2009-81664 discloses a drive assisting apparatus which is provided with a wide-angle rear camera which is an imaging means disposed at a prescribed rear position of a vehicle and a display means which is provided inside the vehicle and displays an image taken by the wide-angle rear camera. In the drive assisting apparatus, parts of a wide-angle image obtained by capturing an image of a region right behind the vehicle and regions on the right and left of the vehicle are cut out to produce a rear image, a rear-right side image, and a rear-left side image. A drive assist image is presented to the driver by arranging these images in the display area of the display means in such a manner that the rear image is displayed at the center of the display area, the rear-right side image is displayed on the right of the rear image, and the rear-left side image is displayed on the left of the rear image.

The drive assisting apparatus presents the drive assist image in the following manner. The rear image is generated by performing image processing such as coordinate conversion on image data of the cut-out part of the wide-angle image taken so that the generated rear image has a corresponding size to a mirror reflection image of the region right behind the vehicle as visually recognized by the driver of the vehicle via the room mirror. The rear-right side image and the rear-left side image are generated by performing image processing such as image compression on image data of the cut-out parts of the wide-angle image taken so that the images fit display spaces for the images in the display area (i.e., spaces on the right and left of the rear image displayed at the center).

As for a drive assist image generated in the above-described manner, images of a wide area, that is, a region right behind the vehicle and regions on the right and left of the vehicle, can be displayed efficiently in the limited display area of the display means. Since a rear image is displayed so as to have a corresponding size to a mirror reflection image of the region right behind the vehicle as visually recognized by the driver of the vehicle via the room mirror, the driver can recognize the image with a correct sense of distance.

However, the method disclosed in JP-A-2009-81664 has the following disadvantages. An example situation that a driver uses the drive assisting apparatus disclosed in JP-A-2009-81664 is that the driver parks a vehicle in a parking space by reversing the vehicle. In introducing the vehicle into the parking space or placing the vehicle in the parking space (i.e., positioning the vehicle with respect to the parking space), the driver performs necessary drive operations mainly looking at a rear image displayed at the center of the display area of the display means. Furthermore, while performing such drive operations, the driver needs to check whether or not a pedestrian, another vehicle, or the like is coming from a direction on the right or left of his or her own vehicle using the rear-right side image and the rear-left side image of a drive assist image.

Since the rear-right side image and the rear-left side image which are displayed on the right and left of the rear image have been subjected to image compression so as to fit the display area, these images are distorted as compared with a case that the driver looks at a region on the rear-right or rear-left of the vehicle with his or her naked eyes. Therefore, when the driver tries to check whether or not a pedestrian, another vehicle, or the like is coming from a direction on the right or left of the parking space by looking at the rear-right side image and the rear-left side image, the driver has difficulty recognizing the distance to an approaching pedestrian, another vehicle approaching, or the like included in the rear-right side image or the rear-left side image and an approaching speed of pedestrian or another vehicle to the parking space. As such, to a driver, the drive assisting apparatus disclosed in JP-A-2009-81664 is less comfortable to use.

SUMMARY OF INVENTION

Illustrative aspects of the present invention provide a drive assisting apparatus capable of displaying a drive assist image that is more comfortable to use to a driver using an image obtained by capturing an image of a neighborhood of a vehicle with an imaging means that is fixed to the vehicle at a prescribed position.

According to a first aspect of the invention, a drive assisting apparatus includes: at least one imaging means disposed at a prescribed rear or front position of a vehicle; an image processor configured to generate a drive assist image by performing image processing on a rear or front neighborhood image obtained by capturing an image of a rear or front neighborhood of the vehicle with the imaging means; and a display means configured to display, on a display screen, the drive assist image that is output from the image processor, wherein: the image processor is configured to capture the rear or front neighborhood image, to set a rear or front cut-out region which is a central portion of the rear or front neighborhood image and corresponds to a region right behind or right in front of the vehicle, and to set, in the rear or front neighborhood image, a rear-right or front-right side cut-out region which corresponds to a region located on the rear-right or front-right of the vehicle and a rear-left or front-left side cut-out region which corresponds to a region located on the rear-left or front-left of the vehicle; the image processor is configured to generate a rear or front image based on an image that is cut out from the rear or front neighborhood image as an image corresponding to the rear or front cut-out region, to generate a rear-right or front-right side image based on an image that is cut out from the rear or front neighborhood image as an image corresponding to the rear-right or front-right side cut-out region, and to generate a rear-left or front-left side image based on an image that is cut out from the rear or front neighborhood image as an image corresponding to the rear-left or front-left side cut-out region; the drive assist image is displayed on the display screen in such a manner that: the rear-right side image is displayed in a right area of the display screen above the rear image so as to be right/left-inverted with a vertical center line of the rear-right side image as an axis of inversion; that the rear-left side image is displayed in a left area of the display screen above the rear image so as to be right/left-inverted with a vertical center line of the rear-left side image as an axis of inversion; and that the rear image is displayed below the rear-right side image and the rear-left side image so as to be right/left-inverted with a vertical center line of the rear image as an axis of inversion, or in such manner that: the front-right side image is displayed in a right area of the display screen above the front image; that the front-left side image is displayed in a left area of the display screen above the front image; and that the front image is displayed below the front-left side image and the front-left side image; and the image processor is configured to generate the rear-right or front-right side image by performing image processing so that a vertical width of the rear-right or front-right side image is increased as a position goes away from a sideline, closer to a vertical center line of the display screen, of the rear-right or front-right side image toward its right outside line, and to generate the rear-left or front-left side image by performing image processing so that a vertical width of the rear-left or front-left side image is increased as a position goes away from a sideline, closer to the vertical center line of the display screen, of the rear-left or front-left side image toward its left outside line.

BRIEF DESCRIPTION OF THE DRAWINGS

Fig. 1 is a block diagram showing a configuration of a drive assisting apparatus according to an embodiment of the present invention;
Figs. 2A and 2B are a side view and a top view, respectively, of a vehicle illustrating how cut-out regions are defined;
Fig. 3 shows an example rear neighborhood image taken according to the embodiment as well as cut-out regions set therein; and
Fig. 4A shows the example rear neighborhood image in which cutting angles are shown and Fig. 4B shows a drive assist image obtained from the rear neighborhood image of Fig. 4A.

DETAILED DESCRIPTION OF EXEMPLARY EMBODIMENTS

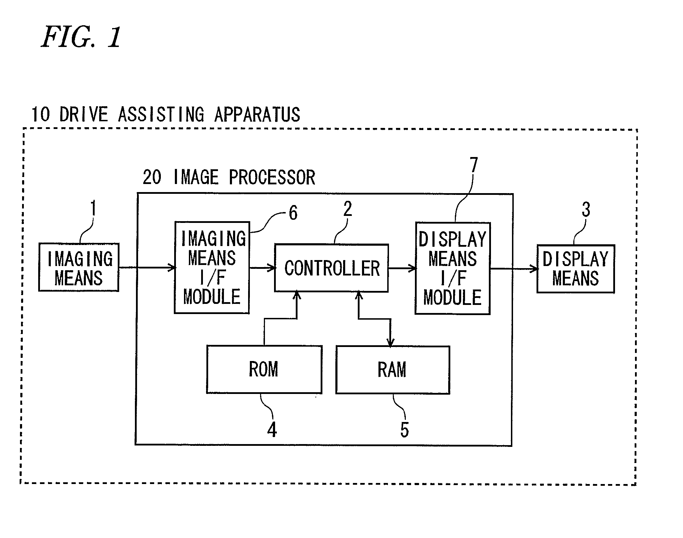

An embodiment of the present invention will be hereinafter described in detail with reference to Figs. 1 to 4B. The embodiment relates to an example drive assisting apparatus in which one imaging means is disposed at a vehicle rear position. The invention is not limited to the following embodiment and various modifications are possible without departing from the spirit and scope of the invention.

[Embodiment]

Fig. 1 is a block diagram showing a configuration of a drive assisting apparatus according to the embodiment. As shown in Fig. 1, the drive assisting apparatus 10 is provided with an imaging means 1, a display means 3, and an image processor 20. The image processor 20 is provided with a ROM 4, a RAM 5, an imaging means I/F module 6, a display means I/F module 7, and a controller 2 for controlling these modules.

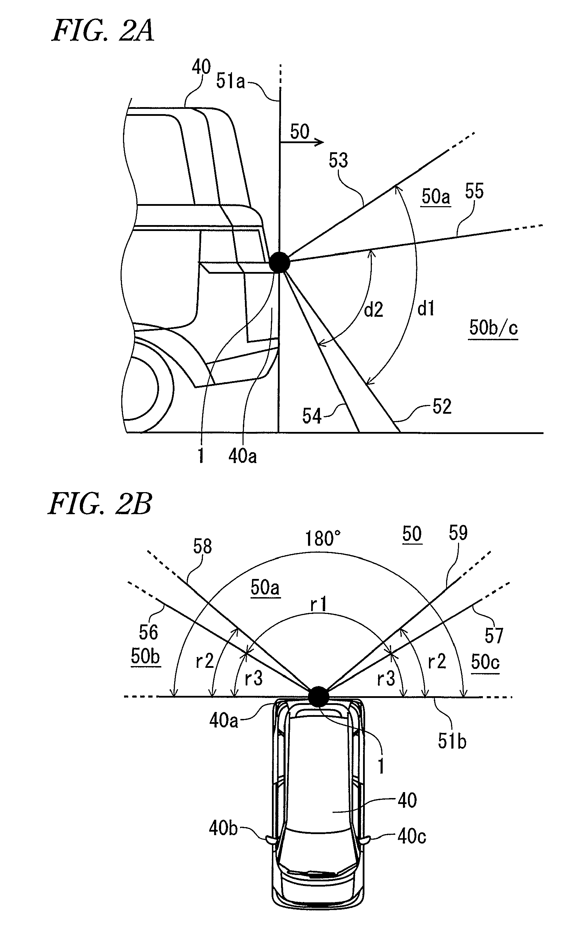

Although not shown in any figures, the imaging means 1 is provided with a wide-angle lens such as a fish-eye lens, a lens holder which holds the wide-angle lens, a diaphragm, a filter, and an imaging device such as a CCD on which an image carried by a light beam passing through the wide-angle lens is formed. As shown in Figs. 2A and 2B, a single imaging means 1 is disposed on top of a rear bumper 40a of a vehicle 40 approximately at the center in the vehicle width direction (e.g., over a license plate that is disposed at a rear position of the vehicle 40). The imaging means 1 captures an image of a neighborhood behind the vehicle 40 in the entire capturable range of the imaging means 1. Although the embodiment is directed to the case that the single imaging means 1 is installed, plural imaging means may be installed so as to capture an image of respective divisional regions of a neighborhood behind the vehicle 40.

The display means 3 is provided with a liquid crystal panel having a touch screen function, and displays an image based on data that is supplied from the image processor 20. Although not described in detail, the display means 3 may display a map image that is transmitted from a car navigation system (not shown) provided in the vehicle 40 or an image transmitted from an image reproducing apparatus such as a DVD player provided in the vehicle 40.

Next, the image processor 20 will be described. The imaging means I/F module 6 is an interface which is provided between the imaging means 1 and the controller 2 and which captures an image taken by the imaging means 1 and outputs corresponding image data to the controller 2. Incorporating an image ASIC etc. (not shown), the controller 2 performs image processing such as image cutting-out and distortion correction on image data that corresponds to an image taken by the imaging means 1 and is supplied from the imaging means I/F module 6. The display means I/F module 7 is an interface which is disposed between the controller 2 and the display means 3 and which receives image data as image-processed by the controller 2 and outputs corresponding image data to the display means 3.

The ROM 4 stores programs for image processing to be performed by the controller 2, a coordinate conversion table to be referred to in performing coordinate conversion on an image captured by the controller 2, and other information. The controller 2 performs image processing as mentioned above according to these programs and coordinate conversion table. The RAM 5 is used as a work area of the controller 2; for example, the RAM 5 temporarily stores an image of a neighborhood behind the vehicle 40 that is always captured by the imaging means 1 and temporarily stores an image as subjected to image processing when the controller 2 performs image processing.

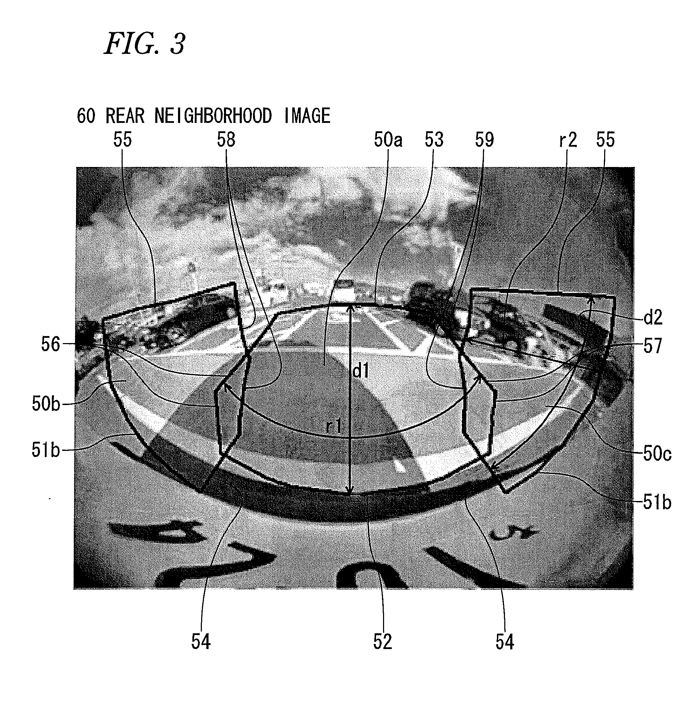

Next, the principle of operation of the drive assisting apparatus 10 according to the embodiment will be described with reference to Figs. 1 to 3. In the following description, referring to Fig. 2B, the side of a vehicle 40 on which a right-hand door mirror 40b is provided will be referred to the right side and the side of the vehicle 40 on which a left-hand door mirror 40c is provided will be referred to the left side. When the driver has started an act of parking the vehicle 40 by reversing the vehicle 40 (e.g., when the driver has shifted the shift lever to "R (reverse)" in the case where the vehicle 40 is an AT vehicle), the drive assisting apparatus 10 starts to operate. The controller 2 of the image processor 20 reads a rear neighborhood image 60 shown in Fig. 3 from the RAM 5 and starts performing image processing on the rear neighborhood image 60.

The rear neighborhood image 60 is an image that was obtained by capturing an image of a neighborhood behind the vehicle 40 in the entire capturable range of the imaging means 1 and stored in the RAM 5. The entire rear capturable range of the imaging means 1 means the whole of a imaging range 50 which is behind a vertical imaging boundary 51a (i.e., the line that passes the center of the imaging means 1 and is perpendicular to the ground) in a side view of Fig. 2A and behind a horizontal imaging boundary 51b (i.e., the line that passes the center of the imaging means 1 and is parallel with the rear end of the vehicle 40) in a top view of Fig. 2B.

As shown in Fig. 2B, the controller 2 cuts out, from the rear neighborhood image 60, image regions that are a rear cut-out region 50a corresponding to a region right behind a rear bumper 40a of the vehicle 40, a rear-right side cut-out region 50b which corresponds to a region located on the rear-right of the vehicle 40 and which is on the right of the rear cut-out region 50a (there is an overlap between the regions 50a and 50b), and a rear-left side cut-out region 50c which corresponds to a region located on the rear-left of the vehicle 40 and which is on the left of the rear cut-out region 50a (there is an overlap between the regions 50a and 50c). How these image regions are cut out will be described below.

As shown in Fig. 2A, the vertical range of the rear cut-out region 50a is defined by a boundary line 52 that connects the center of the imaging means 1 and a position on the ground that is distant, in the front-rear direction, from the rear end of the bumper 40a by a prescribed distance (i.e., a distance (e.g., 1 m) that allows the vehicle 40 to stop without colliding with a obstacle such as a curb located behind the vehicle 40 even if the driver steps on the brake after recognizing the obstacle in reversing the vehicle 40 at a low speed) and a boundary line 53 which is a straight line that is drawn obliquely rearward from the center of the imaging means 1 and forms a prescribed angle d1 with the boundary line 52. As shown in Fig. 2B, the horizontal range of the rear cut-out region 50a is defined by boundary lines 56 and 57 that are drawn obliquely rearward from the center of the imaging means 1 and form an angle r3 with the horizontal imaging boundary 51b. The angle formed by the boundary lines 56 and 57 is set at a prescribed value

$$r1 \ (= 180° - 2 \times r3).$$

The controller 2 sets such a rear cut-out region 50a in the rear neighborhood image 60. More specifically, as shown in Fig. 3, the controller 2 sets, as a rear cut-out region 50a, approximately at the center of the rear neighborhood image 60, a region that is enclosed by thick lines corresponding to the boundary lines 52, 53, 56, and 57.

On the other hand, as shown in Fig. 2A, the vertical range of each of the rear-right side cut-out region 50b and the rear-left side cut-out region 50c is defined by a boundary line 54 that connects the center of the imaging means 1 and a position on the ground that is distant toward the vehicle 40 from the interconnection of the boundary line 52 and the ground by a prescribed distance and a boundary line 55 which is a straight line that is drawn obliquely rearward from the center of the imaging means 1 and forms a prescribed angle d2 with the boundary line 54. As shown in Fig. 2B, the horizontal range of the rear-right side cut-out region 50b is defined by the horizontal imaging boundary 51b and a boundary line 58 which is a straight line that is drawn obliquely rearward from the center of the imaging means 1 and forms a prescribed angle r2 (> r3) with the horizontal imaging boundary 51b. The horizontal range of the rear-left side cut-out region 50c is defined by the horizontal imaging boundary 51b and a boundary line 59 which is a straight line that is drawn obliquely rearward from the center of the imaging means 1 and forms the prescribed angle r2 with the horizontal imaging boundary 51b.

The controller 2 sets such a rear-right side cut-out region 50b and rear-left side cut-out region 50c in the rear neighborhood image 60. More specifically, as shown in Fig. 3, the controller 2 sets, as a rear-right side cut-out region 50b, on the left of the rear cut-out region 50a in the rear neighborhood image 60, a region that is enclosed by thick lines corresponding to the boundary lines 54, 55, and 58 and the horizontal imaging boundary 51b. The controller 2 sets, as a rear-left side cut-out region 50c, on the right of the rear cut-out region 50a in the rear neighborhood image 60, a region that is enclosed by thick lines corresponding to the boundary lines 54, 55, and 59 and the horizontal imaging boundary 51b.

The controller 2 sets the rear cut-out region 50a, the rear-right side cut-out region 50b, and the rear-left side cut-out region 50c in the rear neighborhood image 60 in the above described manner, and cuts out images corresponding to the cut-out regions 50a, 50b, and 50c and stores the images in the RAM 5 as image data. More specifically, image data that is cut out as data corresponding to the rear cut-out region 50a, image data that is cut out as data corresponding to the rear-right side cut-out region 50b, image data that is cut out as data corresponding to the rear-left side cut-out region 50c are stored in the RAM 5 as rear image data, rear-right side image data, and rear-left side image data, respectively.

The above-mentioned boundary lines (horizontal imaging boundary 51b and boundary lines 52 to 59) are defined imaginarily in the rear neighborhood image 60 to perform image processing.

Then, the controller 2 performs image combining, that is, combines together the rear image data, the rear-right side image data, and the rear-left side image data stored in the RAM 5, so that images corresponding to the rear-right side image data and the rear-left side image data are displayed side by side in a top area of the display screen and an image corresponding to the rear image data is displayed below the images corresponding to the rear-right side image data and the rear-left side image data, and outputs resulting image data to the display means 3 via the display means I/F module 7 as drive assist image data. An image corresponding to the drive assist image data is displayed on the display screen of the display means 3 as a drive assist image 70 (described later).

Next, a specific operation and advantages of the drive assisting apparatus 10 according to the embodiment will be described with reference to Fig. 1 to Fig. 4B. The following description will be directed to a case that the driver parks the vehicle 40 in a parking space of such an area as a parking lot of a retail facility where many persons and other vehicles come and go, by reversing the vehicle 40.

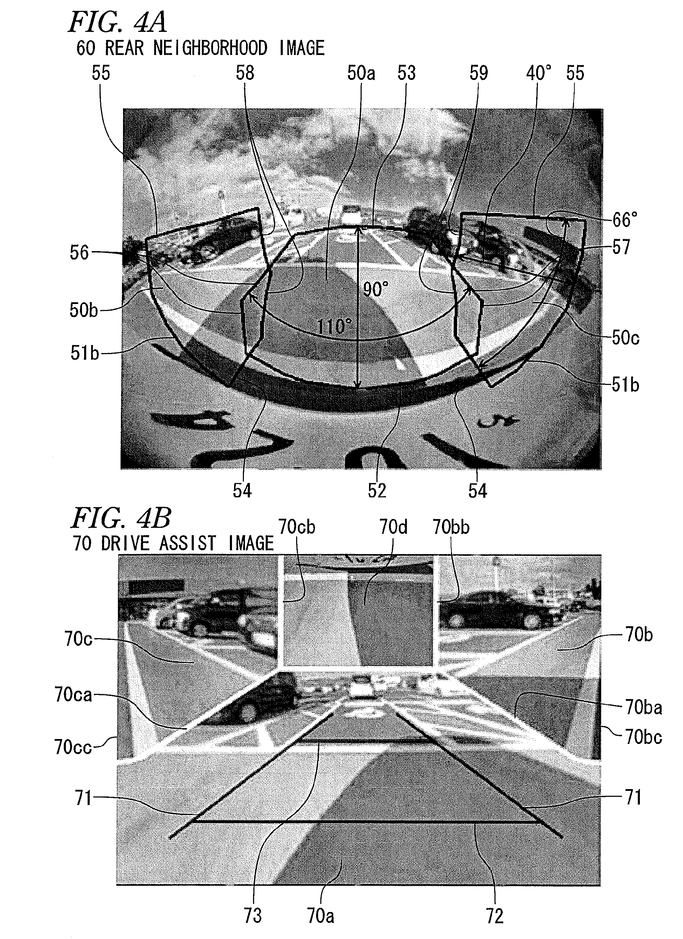

The driver starts reversing the vehicle 40 to park the vehicle 40 in a parking space enclosed by white lines which is included in a rear neighborhood image 60 shown in Fig. 4A. As described above, the controller 2 sets a rear cut-out region 50a, a rear-right side cut-out region 50b, and a rear-left side cut-out region 50c in the rear neighborhood image 60, cuts out image data corresponding to the respective cut-out regions 50a, 50b, and 50c, and stores the cut-out image data in the RAM 5. As shown in Fig. 4A, it is assumed that the angles that are formed by the boundary lines in the vertical plane and the horizontal plane and represent sizes of the cut-out regions 50a, 50b, and 50c are as follows: d1 = 90°, d2 = 66°, r1 = 110°, and r2 = 40°.

The controller 2 generates drive assist image data by performing image processing so that a rear image 70a corresponding to rear image data that is cut out as data corresponding to the rear cut-out region 50a is displayed in a bottom area of the display screen of the display means 3 so as to be right/left-inverted with a vertical center line of the rear image 70a as the axis of inversion, that a rear-right side image 70b corresponding to rear-right side image data that is cut out as data corresponding to the rear-right side cut-out region 50b is displayed in a top-right area of the display screen of the display means 3 so as to be right/left-inverted, and that a rear-left side image 70c corresponding to rear-left side image data that is cut out as data corresponding to the rear-left side cut-out region 50c is displayed in a top-left area of the display screen of the display means 3 so as to be right/left-inverted. Then, the controller 2 outputs the generated drive assist image data to the display means 3 and thereby displays a drive support image 70 as shown in Fig. 4B on the display screen of the display means 3.

In the drive support image 70 shown in Fig. 4B, a top viewing point image 70d is displayed between the rear-right side image 70b and the rear-left side image 70c. Although not described in detail, the top viewing point image 70d is an image that would be obtained when looked down from an imaginary viewing point located behind the vehicle 40 at a prescribed height and that is generated by the controller 2 by performing image processing such as coordinate conversion on a prescribed region of the rear neighborhood image 60. Although in the embodiment the drive support image 70 includes the top viewing point image 70d, the top viewing point image 70d may be omitted by extending the display areas of the rear-right side image 70b and the rear-left side image 70c toward the vertical center line of the display screen or extending the display area of the rear image 70a upward so as to replace the display area of the top viewing point image 70d.

In generating drive assist image data, the controller 2 performs such image processing as correction of distortions of image data that are cut out as data corresponding to the respective cut-out regions 50a, 50b, and 50c. In doing so, the controller 2 may perform image expansion or reduction so that images corresponding to respective image data are displayed on the display screen of the display means 3 without causing excess or shortage in the display of the contents of the respective image data. Techniques relating to the correction of such distortions are known (e.g., JP-A-2008-311890), but will not be described in detail here because they do not directly relate to the invention.

In parking the vehicle 40 in a parking space as shown in the rear neighborhood image 60 of Fig. 4A, the driver needs to drive the vehicle 40 for parking while making safety checks, that is, checking for another vehicle crossing the road portion in front of the parking space or a pedestrian approaching the parking space from either side of the vehicle 40.

In the drive assisting apparatus disclosed in JP-A-2009-81664, to allow the driver to recognize a rear image with a correct sense of distance, a rear image is generated so as to have the corresponding size to a mirror reflection image of a region right behind the vehicle as visually recognized by the driver of the vehicle via the room mirror. However, a rear-right side image and a rear-left side image which are displayed on the right and left of the rear image are distorted because the images have been subjected to image compression so as to fit the display area. Therefore, when the driver tries to check whether or not a pedestrian, another vehicle, or the like is coming from a direction on the right or left of his or her own vehicle, the driver has difficulty recognizing the distance between his or her own vehicle and an approaching pedestrian, another vehicle approaching, or the like included in the rear-right side image or the rear-left side image and a speed of approach of the pedestrian, the other vehicle, or the like.

In contrast, in the drive assist image 70 generated according to the embodiment, a rear image 70a is displayed in the bottom area of the display screen of the display means 3 over the full horizontal width of the display screen and a rear-right side image 70b and a rear-left side image 70c are displayed side by side above the rear image 70a. Therefore, the rear-right side image 70b and the rear-left side image 70c can be displayed in larger areas than in the display form of JP-A-2009-81664 in which the rear-right side image and the rear-left side image are displayed on the right and left of the rear image. As a result, the rear-right side image 70b and the rear-left side image 70c can be increased in visibility because distortions and horizontal compression are reduced.

As shown in Fig. 4B, each of the rear-right side image 70b and the rear-left side image 70c is displayed after being subjected to such image processing that its vertical width is increased as the position goes away from the sideline closer to the vertical center line of the display screen toward the right or left outside line. More specifically, for the rear-right side image 70b, image processing is performed so that a region dividing line 70ba which is a generally straight oblique line extending top-left to bottom-right and connects the bottom end of a region dividing line 70bb between the rear-right side image 70b and the top viewing point image 70d and the bottom end of a right sideline 70bc of the rear-right side image 70b serves as the boundary between the rear-right side image 70b and the rear image 70a. For the rear-left side image 70c, image processing is performed so that a region dividing line 70ca which is a generally straight oblique line extending top-right to bottom-left and connects the bottom end of a region dividing line 70cb between the rear-left side image 70c and the top viewing point image 70d and the bottom end of a left sideline 70cc of the rear-left side image 70c serves as the boundary between the rear-left side image 70c and the rear image 70a.

Therefore, in checking for a pedestrian, another vehicle, or the like coming from a direction on the right or left of the vehicle 40, the driver can see wider regions located on the rear-right and rear-right of the vehicle 40 and can easily recognize the distance between the vehicle 40 and a pedestrian, another vehicle, or the like included in the rear-right side image 70b or the rear-left side image 70c and a speed of approach of the pedestrian, the other vehicle, or the like. Since the region dividing lines 70ba and 70ca are oblique lines, the parking space and its vicinity as a target of movement of the vehicle 40 can be shown in the rear image 70a without causing excess or shortage in the display of their contents. Furthermore, since the rear image 70a is displayed over the full horizontal width of the display screen, other parked vehicles etc. around the target parking space are displayed as large images and hence the driver can recognize situations of the target parking space and its vicinity.

In the drive assist image 70 generated according to the embodiment, as shown in Fig. 4B, to allow the driver to perform parking drive operations more easily, two vehicle width lines 71 indicating the width of the vehicle 40 and two imaginary distance indication lines 72 and 73 indicating positions that are distant from the rear bumper 40a of the vehicle 40 by prescribed distances (e.g., 1 m and 5 m) are displayed in the rear image 70a and the region dividing lines 70ba and 70ca are set so as to be parallel with the respective vehicle width lines 71. As a result, the driver can easily discriminate the rear image 70a from the rear-right side image 70b and the rear-left side image 70c in the drive assist image 70 and can view, without feeling that something is wrong, the drive assist image 70 in which the rear image 70a is separated from the rear-right side image 70b and the rear-left side image 70c. The drive assist image 70 is thus comfortable to use to the driver.

The region dividing lines 70ba and 70ca may not be parallel with the respective vehicle width lines 71 though in such a case the driver may feel that something is wrong. Furthermore, the region dividing lines 70ba and 70ca may be curves, wavy lines, or lines of some other kind. Also in these cases, the rear image 70a can easily be discriminated from the rear-right side image 70b and the rear-left side image 70c and hence their visibility is increased.

As described above, in the drive assisting apparatus according to the invention, a rear image (or front image) is displayed in a bottom area of the display screen of a display means. A rear-right side image (or front-right side image) and a rear-left side image (or front-left side image) are displayed side by side in a top area of the display screen in such a manner that each of their widths in the vertical direction increases as the position goes away from the sideline closer to the vertical center line of the display screen toward the right or left outside line. With this measure, display objects (e.g., white lines and stoppers in a parking space, a nearby concrete block wall, etc.) existing ahead in a movement direction of the vehicle can be displayed in the rear image (or front image) without causing excess of shortage in their display. In the rear-right side image (or front-right side image) and the rear-left side image (or front-left side image), the driver can easily recognize a pedestrian, another vehicle, or the like coming from a direction on the right or left of his or her own vehicle. A drive assist image that is comfortable to use to the driver can thus be provided.

In the above-described embodiment, an image of a neighborhood behind the vehicle 40 is captured by the imaging means 1 which is disposed at a rear position of the vehicle 40 and a drive assist image 70 is generated by performing image processing on resulting image data and presented to the driver. Another configuration is possible in which an image of a neighborhood in front of the vehicle 40 is captured by the imaging means 1 which is disposed at a front position of the vehicle 40 and a drive assist image is generated by performing image processing on resulting image data.

Where imaging means 1 is disposed at a front position of the vehicle 40, a single imaging means 1 is disposed over a front bumper of the vehicle 40 approximately at the center in the vehicle width direction (e.g., over a license plate that is disposed at a front position of the vehicle 40). A imaging range of the imaging means 1 for a front neighborhood image and a front cut-out region, a front-right cut-out region, and a front-left cut-out region to be set in a front neighborhood image may be set in the same manners as in the case that the imaging means 1 is disposed at a rear position of the vehicle 40 except that the front side and the rear side are switched in Figs. 2A and 2B.

That is, the imaging range for a front neighborhood image is the entire range located on the front side of the vertical imaging boundary 51a and the horizontal imaging boundary 51b. A front cut-out region (which corresponds to the rear-cut-out region shown in Figs. 2A and 2B) is defined by the boundary lines 52 and 53 in the vertical direction and by the boundary lines 56 and 57 in the horizontal direction.

A front-right side cut-out region (which corresponds to the rear-left side cut-out region 50c shown in Figs. 2A and 2B) is defined by the boundary lines 54 and 55 in the vertical direction and by the horizontal imaging boundary 51b and the boundary line 59. A front-left side cut-out region (which corresponds to the rear-right side cut-out region 50b shown in Figs. 2A and 2B) is defined by the boundary lines 54 and 55 in the vertical direction and by the horizontal imaging boundary 51b and the boundary line 58.

The controller 2 sets a front cut-out region, a front-right side cut-out region, and a front-left side cut-out region in a front neighborhood image, cuts out front image data, front-right side image data, and front-left side image data corresponding to the respective cut-out regions, and stores the cut-out image data in the RAM 5. Then, the controller 2 combines the front image data, the front-right side image data, and the front-left side image data so that images corresponding to the front-right side image data and the front-left side image data are displayed side by side in top areas of the display screen and that an image corresponding to the front image data is displayed below the images corresponding to the front-right side image data and the front-left side image data. Then, the controller 2 outputs resulting drive assist image data to the display means 3 via the display means I/F module 7. As a result, an image corresponding to the drive assist image data, that is, a drive support image, is displayed on the display screen of the display means 3.

Where an image of a neighborhood in front of the vehicle is captured by the imaging means 1 which is disposed at a front position of the vehicle 40, the direction of the line of sight of the driver is the same as the imaging direction of the imaging means 1, it is not necessary to perform right/left inversion in generating a drive assist image based on an image taken.

While the driver is driving the vehicle 40 along a road, a pedestrian, another vehicle, or the like may enter the road suddenly from a byway. Particularly in a case that the distance from the front end of the vehicle 40 to the driver' seat is long, a considerable delay may occur until the driver recognizes such a pedestrian, vehicle, or the like as long as the driver's vision is the only means for recognition. If according to the invention a drive assist image of a neighborhood in front of the vehicle 40 is displayed on the display means 3, the driver can recognize, early, a pedestrian, another vehicle, or the like entering the road suddenly by looking at a front-right side image or a front-left side image. A drive assist image that is comfortable to use to the driver can thus be provided.

**Claims**

1. A drive assisting apparatus comprising:

   at least one imaging means disposed at a prescribed rear or front position of a vehicle;
   an image processor configured to generate a drive assist image by performing image processing on a rear or front neighborhood image obtained by capturing an image of a rear or front neighborhood of the vehicle with the imaging means; and
   a display means configured to display, on a display screen, the drive assist image that is output from the image processor, wherein:

   the image processor is configured to capture the rear or front neighborhood image, to set a rear or front cut-out region which is a central portion of the rear or front neighborhood image and corresponds to a region right behind or right in front of the vehicle, and to set, in the rear or front neighborhood image, a rear-right or front-right side cut-out region which corresponds to a region located on the rear-right or front-right of the vehicle and a rear-left or front-left side cut-out region which corresponds to a region located on the rear-left or front-left of the vehicle;
   the image processor is configured to generate a rear or front image based on an image that is cut out from the rear or front neighborhood image as an image corresponding to the rear or front cut-out region, to generate a rear-right or front-right side image based on an image that is cut out from the rear or front neighborhood image as an image corresponding to the rear-right or front-right side cut-out region, and to generate a rear-left or front-left side image based on an image that is cut out from the rear or front neighborhood image as an image corresponding to the rear-left or front-left side cut-out region;
   the drive assist image is displayed on the display screen in such a manner that: the rear-right side image is displayed in a right area of the display screen above the rear image so as to be right/left-inverted with a vertical center line of the rear-right side image as an axis of inversion; that the rear-left side image is displayed in a left area of the display screen above the rear image so as to be right/left-inverted with a vertical center line of the rear-left side image as an axis of inversion; and that the rear image is displayed below the rear-right side image and the rear-left side image so as to be right/left-inverted with a vertical center line of the rear image as an axis of inversion, or in such manner that: the front-right side image is displayed in a right area of the display screen above the front image; that the front-left side image is displayed in a left area of the display screen above the front image; and that the front image is displayed below the front-left side image and the front-left side image; and
   the image processor is configured to generate the rear-right or front-right side image by performing image processing so that a vertical width of the rear-right or front-right side image is increased as a position goes away from a sideline, closer to a vertical center line of the display screen, of the rear-right or front-right side image toward its right outside line, and to generate the rear-left or front-left side image by performing image processing so that a vertical width of the rear-left or front-left side image is increased as a position goes away from a sideline, closer to the vertical center line of the display screen, of the rear-left or front-left side image toward its left outside line.

2. The drive assisting apparatus according to claim 1, wherein a top viewing point image is further displayed over the rear or front image between the rear-right or front-right side image and the rear-left or front-left side image on the display screen, the top viewing point image being an image that is generated by performing image processing on an image that is cut out from the rear or front neighborhood image, as an image taken from an imaginary viewing point located at a top-rear or front-rear position of the vehicle.

3. The drive assisting apparatus according to claim 1 or 2, wherein vehicle width lines indicating a width of the vehicle is displayed in the rear or front image, and
   wherein a boundary line between the rear-right or front-right side image and the rear or front image and a boundary line between the rear-left or front-left side image and the rear or front image are straight lines that are parallel with the respective vehicle width lines.

*FIG. 1*

10 DRIVE ASSISTING APPARATUS

20 IMAGE PROCESSOR

*FIG. 2A*

*FIG. 2B*

## FIG. 3

60 REAR NEIGHBORHOOD IMAGE

## FIG. 4A
### 60 REAR NEIGHBORHOOD IMAGE

## FIG. 4B
### 70 DRIVE ASSIST IMAGE

Europäisches
Patentamt

European
Patent Office

Office européen
des brevets

## EUROPEAN SEARCH REPORT

**Application Number**

EP 12 16 0914

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2009 081664 A (NISSAN MOTOR) 16 April 2009 (2009-04-16) * the whole document * ----- | 1-3 | INV. B60R1/00 |
| A | DE 10 2010 038825 A1 (DENSO CORP [JP]; NIPPON SOKEN [JP]) 10 February 2011 (2011-02-10) * paragraph [0110] - paragraph [0034]; figures 1-14 * ----- | 1-3 | |
| A | WO 2006/022630 A1 (SILICON OPTIX INC [US]; LEE LOUIE [CA]; VAKILI MASOUD [CA]) 2 March 2006 (2006-03-02) * page 8, line 26 - page 19, line 15; figures 1-4 * ----- | 1-3 | |
| A | EP 1 065 642 A2 (FUJITSU TEN LTD [JP]) 3 January 2001 (2001-01-03) * paragraph [0284] - paragraph [0294]; figures 12, 18 * ----- | 1-3 | |
| A | WO 2011/030699 A1 (AISIN SEIKI [JP]; WATANABE KAZUYA [JP]) 17 March 2011 (2011-03-17) * the whole document * ----- | 1-3 | TECHNICAL FIELDS SEARCHED (IPC)

B60R |
| A,D | JP 2008 311890 A (FUJITSU GENERAL LTD) 25 December 2008 (2008-12-25) * the whole document * ----- | 1-3 | |

The present search report has been drawn up for all claims

| Place of search | Date of completion of the search | Examiner |
|---|---|---|
| Berlin | 27 June 2012 | Ekblom, Henrik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 16 0914

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2012

| Patent document cited in search report | | Publication date | Patent family member(s) | | Publication date |
|---|---|---|---|---|---|
| JP 2009081664 | A | 16-04-2009 | CN | 101396988 A | 01-04-2009 |
| | | | EP | 2042374 A2 | 01-04-2009 |
| | | | JP | 2009081664 A | 16-04-2009 |
| | | | KR | 20090031998 A | 31-03-2009 |
| | | | US | 2009079585 A1 | 26-03-2009 |
| DE 102010038825 A1 | | 10-02-2011 | DE | 102010038825 A1 | 10-02-2011 |
| | | | JP | 2011035816 A | 17-02-2011 |
| WO 2006022630 | A1 | 02-03-2006 | CN | 1985266 A | 20-06-2007 |
| | | | EP | 1771811 A1 | 11-04-2007 |
| | | | JP | 4543147 B2 | 15-09-2010 |
| | | | JP | 2008507449 A | 13-03-2008 |
| | | | WO | 2006022630 A1 | 02-03-2006 |
| EP 1065642 | A2 | 03-01-2001 | DE | 60031011 T2 | 05-04-2007 |
| | | | DE | 60037222 T2 | 09-10-2008 |
| | | | EP | 1065642 A2 | 03-01-2001 |
| | | | US | 7366595 B1 | 29-04-2008 |
| | | | US | 2006287825 A1 | 21-12-2006 |
| WO 2011030699 | A1 | 17-03-2011 | CN | 102481876 A | 30-05-2012 |
| | | | EP | 2476588 A1 | 18-07-2012 |
| | | | US | 2012154590 A1 | 21-06-2012 |
| | | | WO | 2011030699 A1 | 17-03-2011 |
| JP 2008311890 | A | 25-12-2008 | JP | 4661829 B2 | 30-03-2011 |
| | | | JP | 2008311890 A | 25-12-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009081664 A
- JP 2008311890 A